(19) **Europäisches Patentamt**

**European Patent Office**

**Office européen des brevets**

(11) **EP 1 304 613 A2**

(12) **EUROPEAN PATENT APPLICATION**

(43) Date of publication:
23.04.2003 Bulletin 2003/17

(51) Int Cl.⁷: $G06F\ 7/58$

(21) Application number: **02023010.8**

(22) Date of filing: **15.10.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **17.10.2001 JP 2001319460**

(71) Applicant: **Oki Electric Industry Co., Ltd.**
**Tokyo (JP)**

(72) Inventor: **Shona, Yoshihiro,**
**c/o Oki Electric Ind. Co., Ltd.**
**Tokyo (JP)**

(74) Representative:
**Kirschner, Klaus Dieter, Dipl.-Phys.**
**Schneiders & Behrendt**
**Rechtsanwälte - Patentanwälte**
**Sollner Strasse 38**
**81479 München (DE)**

(54) **Random number generating system and its method**

(57)    A random number generating system and its method for generating very irregular random numbers without an increase of a consumed current and an expansion of a chip in size, comprising a random number generator 202 for generating random numbers and a signal line 201 for transmitting data to functional blocks arranged outside the random number generator 202, wherein the random number generator 202 has a first shift register 203, a second shift register 204, and a logic device 205 for executing a logical operation between an output from the first shift register 203 and data transmitted through the signal line 201 and then inputting a result of the operation to the second shift register 204 and generates random numbers by using a data value transmitted to the functional block arranged outside the random number generator 202.

# Description

## BACKGROUND OF THE INVENTION

### Field of the Invention

The present invention relates to a random number generating system and its method.

### Related Background Art

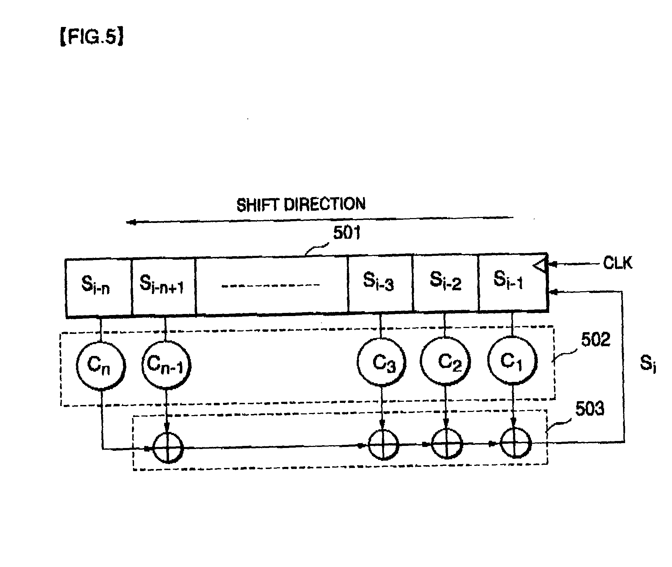

Referring to Fig. 5, there is shown a conventional random number generating system. Conventionally, there is known a random number generating system using a linear feedback shift register (hereinafter, referred to as LFSR). The conventional random number generator using the LFSR comprises an n-stage shift register ($S_{i-1}$, $S_{i-2}$, ---, $S_{i-n}$) 501, tap strings ($C_1$, $C_2$, ---, $C_n$) 502, and an exclusive OR (XOR) circuit group 503.

The shift register 501 shifts preset initial value data by a single bit to the left in synchronization with a clock signal CLK. The tap strings 502 $C_1$ to $C_n$ are preset to 0 or 1. Output $S_i$ is an exclusive OR of values of registers for which $C_k=1$ ($1<k<n$) among $S_{i-1}$ to $S_{i-n}$ in the n-stage shift register 501, where the output $S_i$ equals a result of the following operation expression:

$$(S_{i-1} \cdot C_1) \oplus (S_{i-2} \cdot C_2) \oplus --- \oplus (S_{i-n} \cdot C_n)$$

Then, the $S_i$ is fed back for the input to $S_{i-1}$ of a shift register 701.

The conventional random number generator generates random numbers conforming to the following procedure. Note that, however, procedure (2) and procedure (3) are progressed simultaneously.

  Procedure (1) : The shift register 501 is set to an initial value.
  Procedure (2) : Each of the registers $S_{i-1}$ to $S_{i-n}$ shifts a given value to the left.
  Procedure (3) : The following expression is calculated according to the tap strings 502 preset to 0 or 1 and then it is fed back for the input to the rightmost register $S_{i-1}$.

$$S_{i-1} \cdot C_1 \oplus S_{i-2} \cdot C_2 \oplus --- \oplus S_{i-n} \cdot C_n,$$

  where the operator ì•î represents a product and ì⊕î represents an exclusive OR (XOR).
  Procedure (4): $S_i$ is used if a 1-bit random number is necessary or a value of the required number of bits is outputted for use from respective registers of the shift register 501 if a random number of a plurality of bits is necessary.

In the conventional random number generator, however, a period of a generated random number depends upon the number of stages n of the shift register 501 and a preset value of the tap string 502. As a result, the conventional random number generator generates an identical random number at the same timing if an identical initial value is set, and therefore it is hard to obtain irregular random numbers in this constitution.

## SUMMARY OF THE INVENTION

To solve the above problem, there is provided a random number generating system according to the present invention. Typically, it has a random number generator for generating random numbers, wherein the random number generator generates random numbers by using data transmitted to a functional block arranged outside the random number generator.

## BRIEF DESCRIPTION OF THE DRAWINGS

  Fig. 1 is a block diagram showing a general semiconductor integrated circuit mounted on an IC card;
  Fig. 2 is a circuit diagram showing a constitution of a random number generating system according to a first embodiment of the present invention;
  Fig. 3 is a circuit diagram showing a constitution of a random number generating system according to a second embodiment of the present invention;
  Fig. 4 is a circuit diagram showing a constitution of a random number generating system according to a third embodiment of the present invention; and
  Fig. 5 is a circuit diagram showing a conventional random number generator.

## DETAILED DESCRIPTION OF THE PREFERRED EMBODIMENTS

The preferred embodiments of the present invention will now be described hereinafter on the assumption that a random number generating system according to the present invention is mounted on an IC card.

[First embodiment]

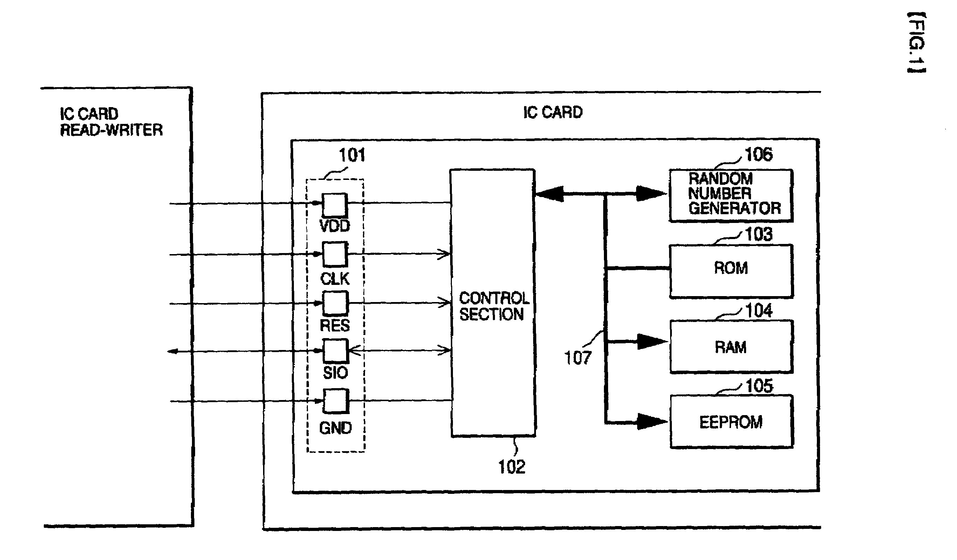

The invention will be described regarding a random number generating system and its method according to a first embodiment of the present invention. First, a semiconductor integrated circuit mounted on an IC card is described by using Fig. 1. Referring to Fig. 1, there is shown a block diagram of a general semiconductor integrated circuit mounted on an IC card. The IC card comprises a contact section 101 for exchanging data or the like with an IC card read-writer, a control section 102 for controlling the entire semiconductor integrated circuit mounted on the IC card, a read only memory (hereinafter, referred to as ROM) 103 for storing a control program or the like executed by the control section 102, a writable and readable memory (hereinafter, referred to as RAM) 104 used when the control section 102 executes the control program, an electrically erasable ROM (hereinafter, referred to as EEPROM) 105 for storing mainly variable data such as transaction data, a random number generator 106 for generating random numbers, and a data bus 107.

The contact section 101 comprises a supply voltage terminal VDD and a ground voltage terminal GND to which a supply voltage and a ground voltage are supplied from a supply circuit (not shown) of the IC card read-writer, a clock terminal CLK to which a clock signal is supplied from a clock circuit (not shown) of the IC card read-writer, a reset terminal RES to which a reset signal is supplied from a reset circuit (not shown) of the IC card read-writer, and a data input-output terminal SIO where serial data is inputted from a data input-output circuit (not shown) of the IC card read-writer and where data from the control section 102 of the IC card is outputted as serial data to an input-output circuit of the IC card read-writer.

The control section 102 is a CPU, where a supply voltage, a ground voltage, a clock signal, a reset signal, and data are inputted from the contact section 101 and then data is outputted to the data input-output terminal SIO of the contact section 101.

The random number generator 106 is connected to the control section 102 and the memories (ROM 103, the RAM 104, and the EEPROM 105) via the data bus 107. Random numbers generated by the random number generator 106 are used for a password decryption or in a scramble transmission in the data bus 107.

Between the IC card and the IC card read-writer, serial data is exchanged via the data input-output terminal (hereinafter, referred to as SIO terminal) of the IC card and the data input-output circuit of the IC card read-writer. This data is transaction information or the like, which is data transmitted for processing to the outside of the random number generator, for example, to the CPU. Data is exchanged between the IC card and the external equipment IC card read-writer in start-stop synchronization and therefore the serial data changes at asynchronous timing. In addition, if a different content of data is exchanged between the IC card and the read-writer, naturally this serial data pattern changes. According to this embodiment, random numbers are generated on the basis of the serial data.

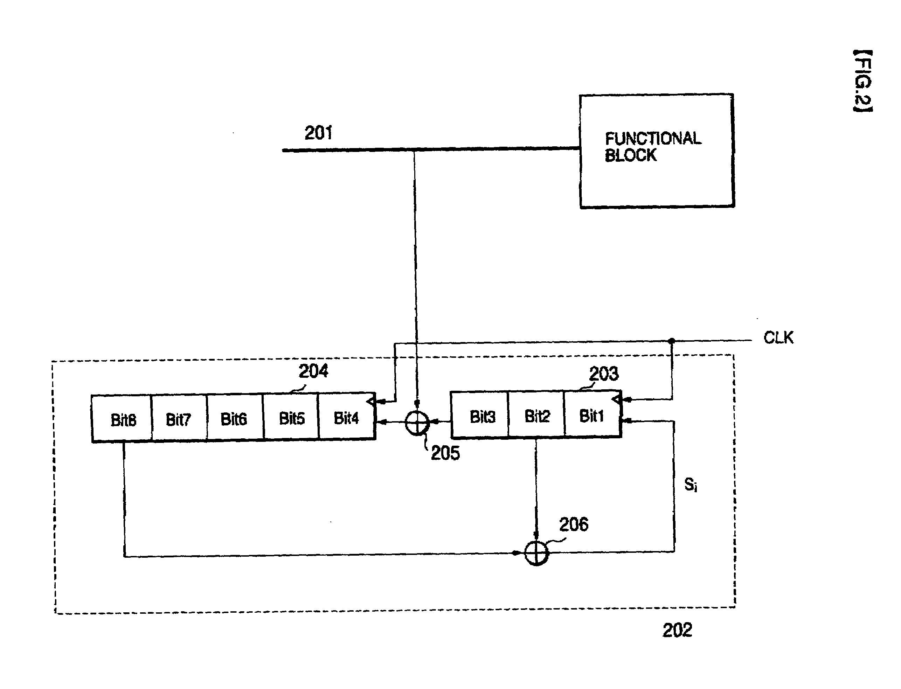

Referring to Fig. 2, there is shown a circuit diagram illustrating a constitution of the first embodiment of the present invention. The random number generating system according to this embodiment comprises a signal line 201 and a random number generator 202 for generating random numbers by using data of the signal line 201.

The signal line 201 is connected to functional blocks. The functional blocks include the CPU, the memories (the ROM, the RAM, and the EEPROM), and the like. These CPU and the memories are not arranged anew for the random number generating system according to the present invention, but those generally mounted on an IC card. Data transmitted through the signal line 201 is serial data transmitted or received between the IC card and the IC card read-writer.

The random number generator 202 is provided with a linear feedback shift register (LFSR). This random number generator 202 comprises a first shift register 203 and a second shift register 204 for shifting preset initial value data by a single bit to the left in synchronization with a clock signal CLK, a logic device (XOR circuit) 205 for executing a logical operation (exclusive OR) between data transmitted through the signal line 201, namely, serial data transmitted or received with the IC card read-writer via the SIO terminal of the IC card and an output of the first shift register 203 and then inputting a result of the operation to the second shift register 204, and a logic device (XOR circuit) 206 for executing a logical operation between an output of a register Bit2 of the first shift register 203 and an output of the second shift register 204 and then feeding back a result of the operation $S_i$ for the input to the first shift register 203.

While the first shift register 203 is a 3-bit register formed by register Bit1 to register Bit3 and the second shift register 204 is a 5-bit register formed by register Bit4 to register Bit8 in this embodiment, they are not limited thereto. In addition, while the result $S_i$ of the logical operation (exclusive OR) between the register Bit2 value of the first shift register 203 and the register Bit8 value of the second shift register 204 is fed back for the input to the first shift register 203 in this embodiment, the operation is not limited thereto, but it is also possible to execute a logical operation of outputs from arbitrary and a plurality of registers among the register Bit1 to Bit8 and then to feed back a result of the operation for the input to the first shift register 203.

Next, a description will be given for a random number generating method in the random number generating system according to the present invention. The random number generating system according to the present invention generates random numbers conforming to the following procedure. Note that, however, Procedure (2) to Procedure (4) are progressed simultaneously.

Procedure (1) : The first shift register 203 and the second shift register 204 are set to initial value data.
Procedure (2) : Each register shifts a given value to the left sequentially by a single bit in synchronization with a clock signal CLK.
Procedure (3) : The logic device (XOR circuit) 205 executes a logical operation (exclusive OR) between an output of the first shift register 203 and data (serial data transmitted or received with the IC card read-writer via the SIO terminal) transmitted through the signal line 201 and then inputs a result of the operation to the second shift register.

Procedure (4) : The logic device (XOR circuit) 206 executes a logical operation (exclusive OR) between an output of the register Bit2 of the first shift register 203 and an output of the second shift register 204 and then feeds back a result of the operation for the input to the first shift register 203.

Procedure (5) : $S_i$ is used if a 1-bit random number is necessary or a value of the required number of bits is outputted for use from an arbitrary register of the first shift register 203 and the second shift register 204 if a random number of a plurality of bits is necessary.

In Procedure (1), a random number generated at a use of the previous IC card and then stored in a memory is used as the initial value used for the settings of the first shift register 203 and the second shift register 204.

Additionally, in Procedure (1), it is also possible to use data stored in a data storage section of the CPU arranged in the periphery of the random number generator 202 as means for setting the first shift register 203 and the second shift register 204 to the initial value.

As set forth hereinabove, the random number generating system according to this embodiment executes a logical operation between data transmitted for use to the functional block (the CPU or the memories) arranged outside the random number generator such as, for example, serial data transmitted or received between the IC card and the IC card read-writer and an output of the first shift register 203 and then inputs a result of the operation to the second shift register 204, thereby enabling a generation of very irregular random numbers, and no circuit is arranged anew outside the random number generator 202, thereby preventing an increase of a consumed current and an expansion of a chip in size.

[Second embodiment]

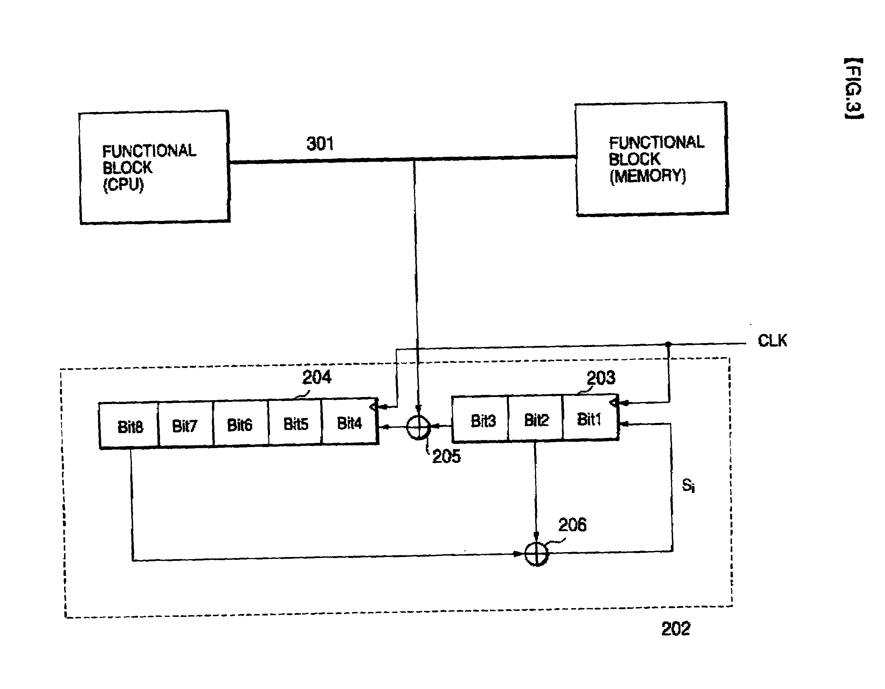

Next, the invention will be described regarding a random number generating system according to a second embodiment of the present invention by referring to Fig. 3. Referring to Fig. 3, there is shown a circuit diagram illustrating a constitution of the random number generating system according to the second embodiment of the present invention. The random number generating system according to this embodiment differs from the random number generating system according to the first embodiment shown in Fig. 2 in that the signal line 201 in Fig. 2 is replaced with a signal line (data bus) 301. Other circuit components are the same as those of the random number generating system according to the first embodiment shown in Fig. 3 and therefore the same reference numerals are appended to those in the following description.

A data bus 301 is not arranged anew according to the present invention, but conventionally arranged between functional blocks mounted on an IC card. The functional blocks include the CPU and the memories, the ROM, RAM, and EEPROM or the like.

Data transmitted through the data bus 301 for connecting these functional blocks with each other varies whenever the CPU accesses the ROM, RAM, or EEPROM. In addition, while data transmitted through the data bus is transmitted in synchronization with a clock signal, a data pattern on the data bus varies irregularly due to different access times of the memories (the ROM, RAM, EEPROM, etc.). It results in an increase of irregularity of data inputted from the data bus 301 to the logic device (XOR circuit) 205, thereby increasing irregularity of data inputted from the logic device (XOR circuit) 205 to the second shift register 204.

Data written into memories (the ROM, RAM, and EEPROM, etc.) in the random number generating system mounted on the IC card or data read from these memories depends upon an IC card and further varies whenever the IC card is used. It results in an increase of irregularity of data inputted from the data bus 301 to the logic device 205, thereby increasing irregularity of a data value inputted from the logic device 205 to the second shift register 204.

Next, a description will be given for a random number generating method in the random number generating system according to this embodiment. The random number generating method in the random number generating system according to this embodiment differs from the random number generating method in the random number generating system according to the first embodiment in Procedure (3), and therefore only Procedure (3) will be described below.

Procedure (3) : The logic device (XOR circuit) 205 executes a logical operation (exclusive OR) between an output from the first shift register 203 and a data value transmitted through the signal line (data bus) and then inputs a result of the operation to the second shift register 204.

As set forth here in above, the random number generating system according to this embodiment executes a logical operation between a data value transmitted through a data bus connecting a plurality of the functional blocks (the CPU, memories, etc.) with each other and an output from the first shift register 203 and then inputs a result of the operation to the second shift register 204, thereby generating very irregular random numbers, and no circuit is arranged anew outside the random number generator 202, thereby preventing an increase of a consumed current and an expansion of a chip in size.

[Third embodiment]

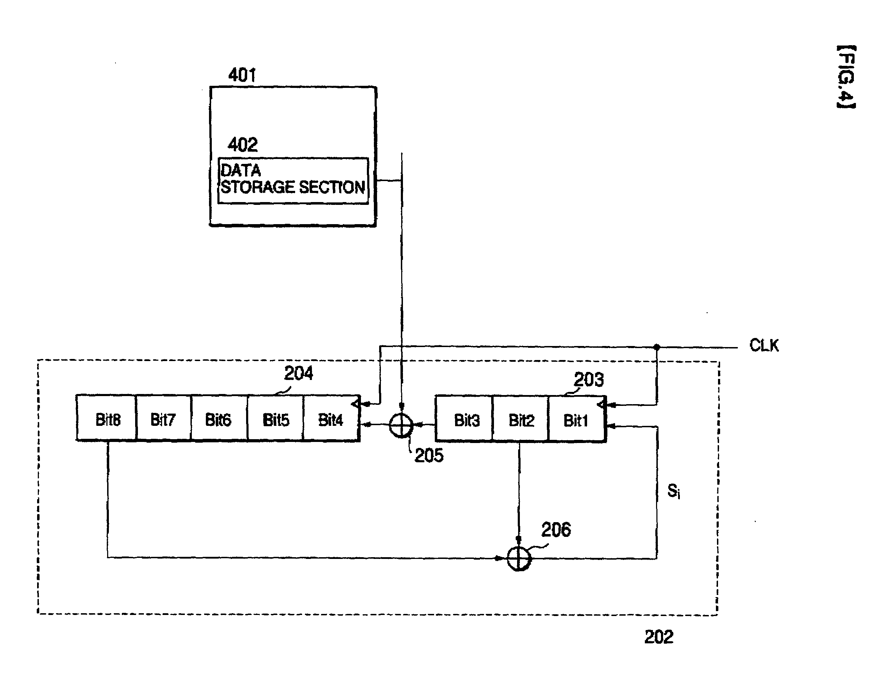

Next, a description will be given for a random number generating system according to a third embodiment of the present invention by referring to Fig. 4. Referring to Fig. 4, there is shown a circuit diagram illustrating a random number generating system according to the third embodiment of the present invention. The random number generating system according to this embodiment differs from the random number generating system according to the first embodiment shown in Fig. 2 in that data inputted from the signal line 201 in Fig. 2 to the logic device (XOR circuit) 205 is replaced with data stored in a data storage section 402 of a CPU 401. Note that, however, the CPU 401 is not arranged anew according to the present invention, but generally mounted on an IC card. Other circuit components are the same as those of the random number generating system according to the first embodiment shown in Fig. 2, and therefore the same reference numerals are appended to those in the following description.

The data storage section 402 is an accumulator in the CPU 401 or a general-purpose register used for an operation very frequently in case of a CPU having no accumulator. This accumulator or general-purpose register is not arranged anew according to the present invention, but conventionally arranged in a CPU.

Data inputted from the accumulator (or the general-purpose register) 402 to the logic device (XOR circuit) 205 varies whenever a program is processed in the CPU 401. In addition, this data changes when a program processing flow is different or when data used for an operation of the CPU, namely, data inputted from external equipment or data read from a memory is different.

In the random number generating system mounted on the IC card, data stored in the accumulator (or the general-purpose register) 402 forming the CPU varies according to data supplied from the IC card read-writer which is external equipment or data read from the memory mounted on the IC card. It results in an increase of irregularity of a data value inputted from the accumulator (or the general-purpose register) 402 to the logic device 205, thereby increasing irregularity of a data value inputted from the logic device 205 to the second shift register 204.

Next, a description will be given for the random number generating method in the random number generating system according to this embodiment. The random number generating method in the random number generating system according to this embodiment differs from the random number generating method in the random number generating system according to the first embodiment in Procedure (3), and therefore only Procedure (3) will be described below.

Procedure (3) : The logic device 205 executes a logical operation (exclusive OR) between an output from the first shift register 203 and data stored in the accumulator (or the general-purpose register) 402 of the CPU 401 and then inputs a result of the operation to the second shift register 204.

As set forth hereinabove, the random number generating system according to this embodiment executes a logical operation between data stored in the data storage section (the accumulator or the general-purpose register) 402 forming the CPU 401 and an output from the first shift register 203 and then inputs a result of the operation to the second shift register 204, thereby generating very irregular random numbers, and no circuit is arranged anew outside the random number generator 202, thereby preventing an increase of a consumed current and an expansion of a chip in size.

[Fourth embodiment]

Next, a description will be given for a random number generating system and a random number generating method according to a fourth embodiment of the present invention.

The random number generating system according to this embodiment differs from the random number generating system according to the third embodiment in that the accumulator (or the general-purpose register) 401 in the third embodiment is replaced with a PSW (program status word). This PSW is not arranged anew according to the present invention, but conventionally arranged in a CPU. Other circuit components are the same as those of the random number generating system according to the third embodiment shown in Fig. 4. Accordingly, this embodiment will be described by referring to Fig. 4.

The PSW 402 is arranged in a control circuit in the CPU. This control circuit controls a memory unit (not shown) and an operation unit (not shown) arranged in the CPU according to a result of decoding of an instruction decoding unit (not shown) arranged in the PSW 402 or the CPU. Data stored in the PSW 402 is a control flag such as, for example, an operation carry or a zero (0) flag. This control flag varies in a complex manner and irregularly according to program processing and operational processing in the CPU 401.

In this embodiment, the control flag allocated to this PSW 402 such as, for example, an operation carry, a zero (o) flag, or a result of a logical operation of these plural values is inputted to the logic device 205 for use. The logic device 205 executes a logical operation (exclusive OR) between data stored in the PSW 402 and an output from the first shift register 203 and then inputs a result of the operation to the second shift register 204. Data stored in the PSW varies according to a difference of a program processing flow or to a difference of data used for operational processing by the CPU, namely, data inputted from external equipment or data read from a memory.

Data stored in the PSW 402 arranged in the CPU in the random number generating system mounted on the IC card varies according to data supplied from the IC card read-writer which is external equipment or to data read from the memory mounted on the IC card. It results in an increase of irregularity of a data value inputted from the PSW 402 to the logic device (XOR circuit) 205, thereby increasing irregularity of a data value inputted from the logic device 205 to the second shift register 204.

Next, a description will be given for the random number generating method in the random number generating system according to this embodiment. The random number generating method in the random number generating system according to this embodiment differs from the random number generating method in the random number generating system according to the third embodiment in Procedure (3) and others are the same as those of the third embodiment, and therefore only Procedure (3) will be described below.

Procedure (3) : The logic device 205 executes a logical operation (exclusive OR) between an output from the first shift register 203 and a data value stored in the PSW (program status word) 402 arranged in the CPU and then inputs a result of the operation to the second shift register 204.

As set forth hereinabove, the random number generating system according to this embodiment executes a logical operation between data stored in the data storage section (PSW: program status word) 402 arranged in the CPU and an output from the first shift register 203 and then inputs a result of the operation to the second shift register 204, thereby generating very irregular random numbers, and no circuit is arranged anew outside the random number generator 202, thereby preventing an increase of a consumed current and an expansion of a chip in size.

As set forth hereinabove in detail, the system according to the present invention typically has a random number generator for generating random numbers, wherein the random number generator generates random numbers by using data transmitted to a functional block arranged outside the random number generator, thereby enabling a generation of very irregular random numbers without any increase of a consumed current nor expansion of a chip in size.

## Claims

**1.** A random number generating system comprising a random number generator for generating random numbers, wherein said random number generator generates random numbers by using data transmitted to a functional block arranged outside said random number generator.

**2.** The system according to claim 1, wherein said random number generator comprises a first shift register, a second shift register, and a logic device for executing a logical operation between data outputted from said first shift register and data transmitted to the functional block arranged outside said random number generator and then outputting a result of the operation to said second shift register.

**3.** The system according to claim 1 or claim 2, wherein said system is mounted on an IC card.

**4.** The system according to claim 3, wherein data transmitted to the functional block arranged outside said random number generator is data transmitted or received between the IC card and an IC card read-writer.

**5.** The system according to one of claim 1 to claim 3, wherein said data transmitted to said functional block arranged outside said random number generator is data transmitted through a data bus connected to a memory.

**6.** The system according to one of claim 1 to claim 5, wherein said function block is a central processing unit.

**7.** A random number generating system, comprising:

a central processing unit having a data storage section; and
a random number generator for generating random numbers on the basis of data stored in said storage section.

**8.** The system according to claim 7, wherein said random number generator has a first shift register, a second shift register, and a logic device for executing a logical operation between data outputted from said first shift register and data stored in said data storage section and then outputting a result of the operation to said second shift register.

**9.** The system according to claim 7 or claim 8, wherein said data storage section is an accumulator.

**10.** The system according to claim 7 or claim 8, wherein said data storage section is a general-purpose register.

**11.** The system according to claim 7 or claim 8, wherein said data storage section is a program status word. **12.** The system according to one of claim 7 to claim 11, wherein said random number generating system is mounted on an IC card.

**13.** A random number generating method, comprising the steps of:

setting an initial value to a random number generator; and
generating random numbers in said random number generator on the basis of data used outside said random number generator.

**14.** The method according to claim 13, wherein the method is used in a random number generating system mounted on an IC card.

**15.** The method according to claim 14, wherein said data is transmitted or received between the IC card and an IC card read-writer.

**16.** The method according to claim 13 or claim 14, wherein said data is transmitted from a data bus connected to a memory.

**17.** The method according to claim 13 or claim 14, wherein said data is stored in a data storage section of a central processing unit.

**18.** The method according to claim 17, wherein said data storage section is an accumulator.

**19.** The method according to claim 17, wherein said data storage section is a general-purpose register.

**20.** The method according to claim 17, wherein said data is a program status word.

**21.** The method according to one of claim 13 to claim 20, wherein said initial value is a random number which has been previously generated.

**22.** The method according to one of claim 13 to claim 20, wherein said initial value is data stored in the data storage section of the central processing unit.

【FIG.1】

【FIG.2】

【FIG.3】

【FIG.4】

【FIG.5】

SHIFT DIRECTION

501

| $S_{i-n}$ | $S_{i-n+1}$ | — — — — — | $S_{i-3}$ | $S_{i-2}$ | $S_{i-1}$ |

CLK

$C_n$ $C_{n-1}$ $C_3$ $C_2$ $C_1$ 502 $S_i$

503